# EUROPÄISCHE PATENTSCHRIFT

(11) **EP 3 455 510 B1**
(45) Veröffentlichungstag und Bekanntmachung des Hinweises auf die Patenterteilung: **15.11.2023**
(21) Anmeldenummer: 17721625.6
(22) Anmeldetag: 03.05.2017
(51) Int. Cl.: F16B 25/00

(54) **SELBSTSCHNEIDENDE BETONSCHRAUBE**
SELF-CUTTING CONCRETE SCREW
VIS À BÉTON AUTOTARAUDEUSE

(30) Priorität: 12.05.2016 DE 102016108772; 01.08.2016 DE 102016114180
(43) Veröffentlichungstag der Anmeldung: 20.03.2019
(73) Patentinhaber: fischerwerke GmbH & Co. KG, 72178 Waldachtal (DE)
(72) Erfinder: WEICHERT, Berthold, 78658 Zimmern (DE)
(86) Internationale Anmeldenummer: PCT/EP2017/060447
(87) Internationale Veröffentlichungsnummer: WO 2017/194357

(56) Entgegenhaltungen:
- EP-B1- 0 861 379
- DE-A1-102013 108 018

## Beschreibung

Die Erfindung betrifft eine selbstschneidende Betonschraube mit den Merkmalen des Oberbegriffs des Anspruchs 1. "Selbstschneidend" bedeutet, dass sich die Betonschraube bei einem Eindrehen in ein Bohrloch in einem Ankergrund aus insbesondere Beton ein Gegengewinde selbst in eine Bohrlochwand des Bohrlochs schneidet oder in anderer Weise formt. Außer Beton kommen Stein oder Mauerwerk als Ankergrund in Frage, wobei andere Ankergründe nicht ausgeschlossen sind.

Das Patent EP 0 861 379 B1 offenbart eine selbstschneidende Betonschraube mit zwei Schaftteilen, die durch Preßschweißen, vorzugsweise Widerstandspreßschweißen oder Reibschweißen miteinander verbunden sind. Ein hinterer, einen Schraubenkopf aufweisender Schaftteil, besteht aus einem austenitischen, nichtrostenden Stahl, vorzugsweise aus V2A- oder V4A-Stahl. Ein vorderer Schaftteil, der beim Eindrehen in ein Bohrloch ein Gegengewinde in eine Bohrlochwand schneidet, besteht aus einem ebenfalls nichtrostenden, martensitisch aushärtenden Stahl mit einem Kohlenstoffgehalt von weniger als 0,01%. Vorzugsweise enthält der martensitisch aushärtende Stahl des vorderen Schaftteils ungefähr 12 % Chrom, 9 % Nickel, 4 % Molybdän und 1 % Titan.

Aufgabe der Erfindung ist eine selbstschneidende Betonschraube mit einem gut geeigneten Stahl für einen vorderen Schaftteil vorzuschlagen. Der vordere Schaftteil schneidet beim Eindrehen in ein Bohrloch ein Gegengewinde für ein Gewinde der Betonschraube in eine Bohrlochwandung.

Gelöst wird diese Aufgabe durch die Merkmale des Anspruchs 1. Die erfindungsgemäße selbstschneidende Betonschraube weist einen Schraubenschaft auf, der aus zwei Schaftteilen zusammengesetzt ist. Zu ihrer Unterscheidung werden die Schaftteile hier als "vorderes Schaftteil" und als "hinteres Schaftteil" bezeichnet. Die Betonschraube wird mit dem vorderen Schaftteil voraus in ein Bohrloch gedreht, wobei ein Gewinde des vorderen Schaftteils ein Gegengewinde in eine Bohrlochwand schneidet oder in anderer Weise das Gegengewinde in die Bohrlochwand formt. Ein Ankergrund, in dem das Bohrloch eingebracht ist, besteht insbesondere aus Beton oder aus Stein. Ankergründe aus anderen Materialien sind nicht ausgeschlossen.

Das hintere Schaftteil dient zu einer Übertragung eines Drehmoments auf das vordere Schaftteil beim Eindrehen in das Bohrloch. Es weist vorzugsweise einen Schraubenkopf zu einem Aufbringen des Drehmoments auf. Außerdem dient das hintere Schaftteil zu einer Verankerung im Bohrloch, sein Gewinde hält die in das Bohrloch eingedrehte Betonschraube durch einen Formschluss seines Gewindes in dem Gegengewinde, das das Gewinde des vorderen Schaftteils zuvor beim Eindrehen in das Bohrloch in die Bohrlochwand geschnitten hat. Das Gewinde des vorderen Schaftteils kann zur Verankerung der Betonschraube beitragen.

Die beiden Schaftteile sind durch Schweißen, insbesondere Reibschweißen und vorzugsweise Rotationsreibschweißen zu dem Schraubenschaft der selbstschneidenden Betonschraube gefügt.

Erfindungsgemäß besteht das vordere Schaftteil aus einem martensitischen, nichtrostenden Stahl mit der Werkstoffnummer 1.4037 (X65Cr13). 1.4037 enthält 0,65 % (zwischen 0,58 % und 0,70 %) Kohlenstoff und 13 % (zwischen 12,5 % und 14,5 %) Chrom. Mit diesem Stahl lässt sich eine größere Härte als bei einem martensitischen, nichtrostenden Stahl mit der Werkstoffnummer 1.4034 nach europäischer Normung (derzeit gültige Norm: EN 10027) erreichen, allerdings ist die Verschweißung mit dem restlichen Schaftteil schwieriger.

Insbesondere besteht auch der hintere Schaftteil der erfindungsgemäßen Betonschraube aus einem nichtrostenden Stahl. Eine Ausgestaltung der Erfindung sieht V4A-Stahl für den hinteren Schaftteil vor, also einen nichtrostenden, austenitischen Stahl mit der Werkstoffnummer 1.4401 und dem Kurznamen X5CrNiMo17-12-2. Er weist einen Kohlenstoffgehalt von maximal 0,07 %, einen Chromanteil von 17 % (zwischen 16,5 und 18,5 %), einen Nickelanteil von 12 % (zwischen 10,0 % und 13,0 %) und einen Molybdängehalt von 2 % (zwischen 2,0 % und 2,5 %) auf.

In bevorzugter Ausgestaltung der Erfindung ist der Schraubenschaft gehärtet, insbesondere induktionsgehärtet. Gehärtet ist zumindest der vordere Schaftteil bzw. ein vorderer Abschnitt des Schraubenschafts, dessen Gewinde beim Eindrehen in ein Bohrloch das Gegengewinde in eine Bohrlochwand schneidet. Das Härten ist insbesondere ein Oberflächenhärten zur Erhöhung einer mechanischen Widerstandsfähigkeit des Gewindes der Betonschraube zum Schneiden des Gegengewindes in die Bohrlochwand. Gehärtet ist wie erläutert der Teil des Gewindes der Betonschraube, der beim Eindrehen in das Bohrloch das Gegengewinde in die Bohrlochwand schneidet. Das restliche Gewinde der Betonschraube kann vollständig oder teilweise gehärtet sein, muss aber nicht gehärtet sein. Ein Gewindekern ist vorzugsweise nur an einer Oberfläche gehärtet oder eventuell nicht gehärtet, um eine Zähigkeit möglichst nicht zu verringern und so die Belastbarkeit der Betonschraube insbesondere für Querkräfte zu erhalten.

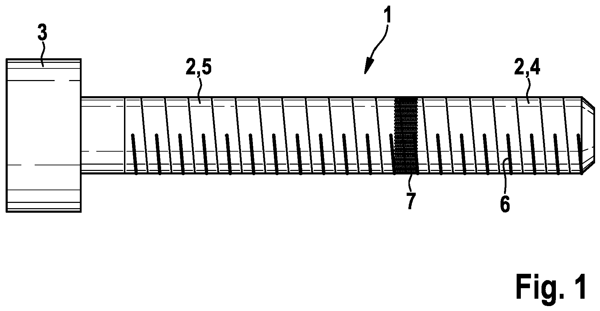

Die Erfindung wird nachfolgend anhand eines in der Zeichnung dargestellten Ausführungsbeispiels näher erläutert. Die einzige Figur zeigt eine erfindungsgemäße selbstschneidende Betonschraube in einer Seitenansicht.

Die in der Zeichnung dargestellte, erfindungsgemäße selbstschneidende Betonschraube 1 weist einen Schraubenschaft 2 mit einem Schraubenkopf 3 an einem Ende auf. Der Schraubenschaft 2 ist aus einem vorderen Schaftteil 4 und einem hinteren Schaftteil 5 zusammengesetzt. Das hintere Schaftteil 5 erstreckt sich vom Schraubenkopf 3 zum vorderen Schaftteil 4.

Das hintere Schaftteil 5 einschließlich des Schraubenkopfs 3 besteht aus V4A-Stahl, also einem nichtrostenden, austenitischen Stahl mit der Werkstoffnummer 1.4401 und dem Stahl- bzw. Materialkurznamen X5CrNiMo17-12-2. Das vordere Schaftteil 4 besteht aus einem nichtrostenden, martensitischen Stahl mit der Werkstoffnummer 1.4037.

Die beiden Schaftteile 4, 5 sind durch Reibschweißen, insbesondere Rotationsreibschweißen gefügt, ein sich eventuell beim Schweißen bildender umlaufender Wulst ist abgedreht oder in anderer Weise entfernt. Eine Schweißzone ist in der Zeichnung mit der Bezugszahl 7 bezeichnet.

Nach dem Schweißen ist ein Gewinde 6 auf den Schraubenschaft 2 gewälzt oder in anderer Weise angebracht, das sich vom vorderen Schaftteil 4 unterbrechungs- und versatzfrei auf das hintere Schaftteil 5 erstreckt. Das Gewinde 6 kann bis zum Schraubenkopf 3 reichen oder mit Abstand vom Schraubenkopf 3 enden.

Nach der Herstellung des Gewindes 6 wird das vordere Schaftteil 4 an der Oberfläche gehärtet. Im Ausführungsbeispiel ist das vordere Schaftteil 4 induktionsgehärtet. Durch das Oberflächenhärten des vorderen Schaftteils 4 ist das Gewinde 6 in einem vorderen, d. h. dem Schraubenkopf 3 fernen Bereich gehärtet, also in einem Bereich, der beim Eindrehen der Betonschraube 1 in ein Bohrloch ein Gegengewinde in eine Bohrlochwand schneidet.

Die erfindungsgemäße Betonschraube 1 ist zu einem Eindrehen in ein Bohrloch in einem Ankergrund aus Beton oder Stein vorgesehen (nicht dargestellt). Beim Eindrehen in das Bohrloch schneidet das Gewinde 6 der Betonschraube 1 ein Gegengewinde in eine Bohrlochwand.

### Bezugszeichenliste

### Selbstschneidende Betonschraube

1 Betonschraube
2 Schraubenschaft
3 Schraubenkopf
4 vorderes Schaftteil
5 hinteres Schaftteil
6 Gewinde
7 Schweißzone

## Patentansprüche

1. Selbstschneidende Betonschraube (1) mit einem Schraubenschaft (2), der aus zwei Schaftteilen (4, 5), einem vorderen Schaftteil (4) und einem hinteren Schaftteil (5), zusammengesetzt ist, wobei die beiden Schaftteile (4, 5) durch Schweißen gefügt sind, **dadurch gekennzeichnet, dass** der vordere Schaftteil (4) aus nichtrostendem Stahl mit der Werkstoffnummer 1.4037 besteht.

2. Selbstschneidende Betonschraube nach Anspruch 1, **dadurch gekennzeichnet, dass** der hintere Schaftteil (5) aus nichtrostendem Stahl besteht.

3. Selbstschneidende Betonschraube nach Anspruch 2, **dadurch gekennzeichnet, dass** der hintere Schaftteil (5) aus nichtrostendem Stahl mit der Werkstoffnummer 1.4401 besteht.

4. Selbstschneidende Betonschraube nach einem der vorhergehenden Ansprüche, **dadurch gekennzeichnet, dass** der Schraubenschaft (2) induktionsgehärtet ist.

## Claims

1. Self-tapping concrete screw (1) comprising a screw shaft (2) which is composed of two shaft parts (4, 5), a front shaft part (4) and a rear shaft part (5), the two shaft parts (4, 5) being joined by welding, **characterized in that** the front shaft part (4) consists of stainless steel having the material number 1.4037.

2. Self-tapping concrete screw according to claim 1, **characterized in that** the rear shaft part (5) consists of stainless steel.

3. Self-tapping concrete screw according to claim 2, **characterized in that** the rear shaft part (5) consists of stainless steel having the material number 1.4401.

4. Self-tapping concrete screw according to any of the preceding claims, **characterized in that** the screw shaft (2) is induction-hardened.

## Revendications

1. Vis à béton autotaraudeuse (1) comportant une tige de vis (2) qui est composée de deux parties de tige (4, 5), une partie de tige avant (4) et une partie de tige arrière (5), dans laquelle les deux parties de tige (4, 5) sont assemblées par soudage, **caractérisée en ce que** la partie de tige avant (4) est en acier inoxydable de numéro de matériau 1.4037.

2. Vis à béton autotaraudeuse selon la revendication 1,
**caractérisée en ce que** la partie de tige arrière (5) est en acier inoxydable.

3. Vis à béton autotaraudeuse selon la revendication 2,
**caractérisée en ce que** la partie de tige arrière (5) est en acier inoxydable de numéro de matériau 1.4401.

4. Vis à béton autotaraudeuse selon l'une des revendications précédentes, **caractérisée en ce que** la tige de vis (2) est trempée par induction.
